# EUROPÄISCHE PATENTSCHRIFT

(11) **EP 1 259 931 B1**
(45) Veröffentlichungstag und Bekanntmachung des Hinweises auf die Patenterteilung: **28.09.2005**
(21) Anmeldenummer: 01913698.5
(22) Anmeldetag: 20.02.2001
(51) Int. Cl.: G06K 9/00

(54) **VERFAHREN ZUR ANALYSE VON FINGERABDRUCKBILDERN**
METHOD FOR ANALYSING FINGERPRINT IMAGES
PROCEDE POUR ANALYSER DES IMAGES D'EMPREINTES DIGITALES

(30) Priorität: 29.02.2000 DE 10009539
(43) Veröffentlichungstag der Anmeldung: 27.11.2002
(73) Patentinhaber: Infineon Technologies AG, 81669 München (DE)
(72) Erfinder: HASELSTEINER, Ernst, A-8010 Graz (AT); JUNG, Stefan, 80469 München (DE); LORCH, Henning, 81541 München (DE); WIRTZ, Brigitte, 83607 Holzkirchen (DE)
(74) Vertreter: Epping - Hermann - Fischer
(86) Internationale Anmeldenummer: PCT/DE2001/000654
(87) Internationale Veröffentlichungsnummer: WO 2001/065470

(56) Entgegenhaltungen:
- WO-A-01/24700
- US-A- 4 827 527
- PATENT ABSTRACTS OF JAPAN vol. 015, no. 205 (P-1206), 27. Mai 1991 (1991-05-27) & JP 03 053385 A (NIPPON DENKI SEKIYURITEI SYST KK), 7. März 1991 (1991-03-07)

## Beschreibung

Die vorliegende Erfindung betrifft ein Verfahren zur Analyse von elektronisch erzeugten Fingerabdruckbildern, mit dem es insbesondere möglich ist, Original-Bilder lebender Finger von Fälschungen zu unterscheiden.

Biometrische Verfahren für die Personenerkennung können in automatisierten Systemen implementiert werden. Solche Systeme verarbeiten die Eingabedaten, die die biometrischen Merkmale enthalten, und extrahieren charakteristische Merkmale, die anschließend einer Person im wesentlichen eindeutig zugeordnet werden können. Für eine zuverlässige Identifizierung ist jedoch sicherzustellen, dass die Messeinrichtung oder Bildaufnahmeeinrichtung nicht manipuliert werden kann. Bei einer Erkennung von Fingerabdrücken anhand eines elektronisch arbeitenden Fingerabdrucksensors ist es erforderlich, ein Fingerabdruckbild, das von einem lebenden aufliegenden Finger stammt, von einem von einem Fälschungsversuch herrührenden Bild unterscheiden zu können. Es gibt eine Reihe von Vorschlägen, mit denen ein lebender Finger anhand von biologischen Eigenschaften (Temperatur, Blutdruck, elektrischer Hautwiderstand, Auflagedruck, Erfassung der durch Schweißabsonderung hervorgerufenen Feuchtigkeit oder dergleichen) von einem toten Finger oder von einem Fingerimitat unterschieden werden kann.

In der US 4,827,527 ist ein Verfahren beschrieben, mit dem die Identifizierung anhand eines Fingerabdrucks durch ein elektronisches System erleichtert werden soll. Zur Überprüfung der Ausrichtung und Zentrierung des Fingerabdrucks auf dem Sensor wird eine Mehrzahl von Fingerabdruckbildern in zeitlicher Folge erfasst. Unterschiede in den Graustufen zwischen einem echten und einem falschen Hintergrundbild werden ermittelt, um so unter anderem feststellen zu können, ob ein lebender Finger aufliegt.

In der WO 01/24700 A1 ist ein Verfahren zur Lebenderkennung bei Fingerabdrucksensoren beschrieben, bei dem eine Folge von Fingerabdruckbildern aufgenommen wird. Es wird bei diesem Verfahren angenommen, dass ein lebender Finger aufgelegt ist, wenn charakteristische Parameter sich in der Bildfolge ausreichend stark verändern. Diese Parameter werden anhand der Bildpunkte festgestellt, die eine untere Grenze der Graustufe überschreiten. Als charakteristische Eigenheit der Bildfolge gilt zum Beispiel die mittlere Bildschwärze und die Dichte der die unterste Graustufe überschreitenden Bildpunkte.

Aufgabe der vorliegenden Erfindung ist es, ein Verfahren zur Analyse von elektronisch erzeugten Fingerabdruckbildern anzugeben, mit dem insbesondere eine Lebenderkennung ohne zusätzlichen Aufwand durchgeführt werden kann.

Diese Aufgabe wird mit dem Verfahren mit den Merkmalen des Anspruches 1 gelöst. Ausgestaltungen ergeben sich aus den abhängigen Ansprüchen.

Bei dem erfindungsgemäßen Verfahren werden das von einem Fingerabdrucksensor erzeugte Fingerabdruckbild und dessen zeitliche Veränderungen verwendet, um eine dynamische Analyse des Fingerabdruckbildes durchzuführen. Während ein Fingerabdruck mittels eines Fingerabdrucksensors erfasst wird, vorzugsweise während ein Finger auf den Sensor aufgelegt wird, wird in sehr kurzen Zeitabständen eine Sequenz von einzelnen Fingerabdruckbildern aufgenommen, deren Unterschiede erfasst werden, und aus dieser dynamischen Veränderung ein Kriterium gewonnen oder eine spezielle Größe berechnet, mit der die Veränderung des Bildes beim Auflegen eines echten, lebenden Fingers von der Veränderung der Bilder beim Auflegen einer Fälschung unterschieden werden kann. Die Fingerabdruckbilder werden dazu von einem elektronisch arbeitenden Fingerabdrucksensor als Bitmap eines Rasters von Bildpunkten mit unterschiedlichen Grauwerten bestimmt, die dann binarisiert wird.

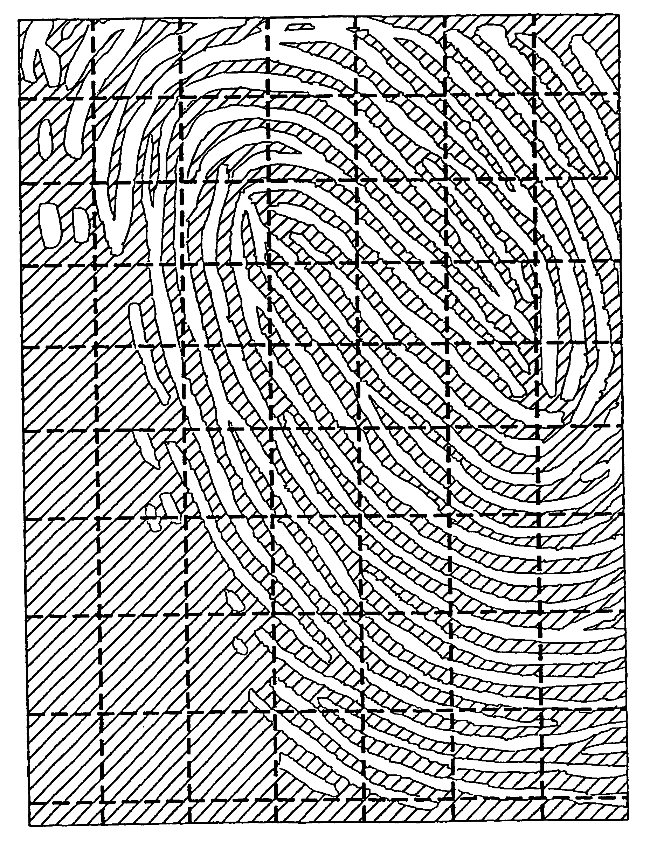

In der beigefügten Figur sind die Schwarzweiß-Konturen eines typischen Fingerabdruckbildes dargestellt, in dem die Stege und Furchen der Hautoberfläche gut erkennbar sind. Je nach dem Auflösungsvermögen des verwendeten Fingerabdrucksensors können insbesondere die Ränder der Fingerabdrucklinien unterschiedliche Grauabstufungen aufweisen, die in der Figur nicht wiedergegeben sind. Das Bild ist zusammengesetzt aus einer Vielzahl kleiner Bildpunkte (Pixel), die vorzugsweise Abmessungen deutlich unterhalb der Linienbreite aufweisen. In der Figur sind durch die breiten gestrichelten Linien Unterteilungen des Bildes in größere Blöcke gegeben, in denen jeweils eine Vielzahl von einzelnen Bildpunkten liegt.

Ein derartiges Fingerabdruckbild ergibt sich mit einem Fingerabdrucksensor, wenn eine Fingerbeere auf einer dafür vorgesehenen Auflagefläche, in der das Bild erfasst wird, aufliegt. Wenn der Finger aufgelegt wird, ist allerdings zunächst nicht die gesamte Hautoberfläche, die den Fingerabdruck bildet, mit dieser Auflagefläche in Berührung, und der typische Anpressdruck beim Aufliegen der Fingerbeere auf dem Sensor ist noch nicht erreicht. Wird eine Sequenz von Fingerabdruckbildern während des Auflegens des Fingers auf den Sensor aufgenommen, so unterscheiden sich diese Bilder in der Regel voneinander; von Bild zu Bild wird der Fingerabdruck zunächst zunehmend deutlicher und dunkler ausgebildet. Aufgrund der unterschiedlichen mechanischen Eigenschaften lassen sich für diese Bildsequenz unterschiedliche charakteristische Merkmale beobachten je nachdem, ob ein lebender Finger oder ein Fingerimitat aufgelegt wird. Das erfindungsgemäße Analyseverfahren untersucht diese Merkmale und gestattet es, daraus eine Lebenderkennung abzuleiten.

Es folgt eine Beschreibung der derzeit bevorzugten Ausführungsformen des Verfahrens. Eine Bildsequenz aus einer Anzahl n von Bildern Bᵢ wird in kurzen zeitlichen Abständen aufgenommen, während eine Probe, beispielsweise eine Fingerbeere, auf den Fingerabdrucksensor aufgelegt wird. Eine solche Sequenz kann mit einem Fingerabdrucksensor mit ausreichend hoher Bildrate (Bildfolgefrequenz) aufgezeichnet werden. Das Fingerabdruckbild ist in einzelne Bildpunkte gerastert. Da die Bildpunkte eine unterschiedliche Helligkeit aufweisen, kann jedem Bildpunkt ein Grauwert zugeordnet werden. Ein mit solchen Grauwerten versehenes Bild kann in ein reines Schwarzweißbild digitalisiert werden, indem festgestellt wird, welche Bildpunkte einen Grauwert oberhalb einer bestimmten Schwelle aufweisen. Diese Bildpunkte erhalten dann eine binäre Eins zugewiesen, während die übrigen Bildpunkte eine binäre Null erhalten. Das erste Bild einer Folge besteht dann typischerweise aus lauter binären Nullen, wenn zum Zeitpunkt der Aufnahme der Finger noch von dem Fingerabdrucksensor entfernt war. Das letzte aufgenommene Bild erscheint dann etwa in der reinen Schwarzweißstrukturierung der beigefügten Figur.

Wesentlich für das erfindungsgemäße Analyseverfahren ist es, dass zu jedem in der angegebenen Weise binarisierten Bild die Anzahl nᵢ der auf Eins gesetzten Bildpunkte bestimmt wird. Es werden zu diesen Anzahlen die Differenzen aufeinander folgender Anzahlen bestimmt: dᵢ = nᵢ-nᵢ₋₁. Vorzugsweise wird außerdem die Anzahl n_{edge,i} derjenigen Bildpunkte ermittelt, die in einem Bild Bᵢ erstmals auf Eins gesetzt wurden (d.h. die in dem vorhergehenden Bild Bᵢ₋₁ noch auf Null gesetzt waren) und die außerdem benachbart zu einem in dem vorhergehenden Bild bereits auf Eins gesetzten Bildpunkt liegen (neue Randpunkte). Diese neuen Randpunkte entstehen bei einer Sequenz aus Fälschungsbildern vorwiegend in Verlängerung der Fingerrillen. Vorzugsweise wird für das letzte aufgenommene Bild Bₙ die Gesamtanzahl n_{ridge} derjenigen auf Eins gesetzten Bildpunkte ermittelt, die längs der in dem Bild wiedergegebenen Fingerlinien oder längs fiktiver Mittellinien dieser Fingerlinien (eindimensional) aufeinander folgen oder längs entsprechender Mittellinien, die rechnerisch durch ein Ausdünnen der im Bild durch die auf Eins gesetzten Bildpunkte wiedergegebenen Fingerlinien auf (eindimensionale) Kurven erzeugt werden.

Eine besonders einfache und zweckmäßige Ausgestaltung des Analyseverfahrens ergibt sich, wenn die Bildsequenz so ausgewertet wird, dass diejenigen speziellen Bilder bestimmt werden, bei denen das Verhältnis der Differenz dᵢ der in zwei aufeinander folgenden Bildern auf Eins gesetzten Bildpunkte zu einer dieser Anzahlen nᵢ₋₁ bzw. nᵢ einen bestimmten vorgegebenen Schwellenwert überschreitet. Damit werden diejenigen Bilder bestimmt, in denen eine deutliche Zunahme der Grauwerte gegenüber dem jeweils vorhergehenden Bild festzustellen ist. Diese speziellen Bilder werden überlagert, indem die Nullen und Einsen, die den Bildpunkten zugeordnet worden sind, in herkömmlicher Weise addiert werden, so dass ein Bild mit einer Vielzahl von unterschiedlichen Graustufen entsteht. Die Graustufe eines Bildpunktes in dem addierten Bild gibt somit den Zeitpunkt innerhalb der Bildsequenz an, an dem der betreffende Bildpunkt eine ausreichende Schwärzung erhielt, um auf Eins gesetzt zu werden.

Aus der Verteilung dieser Grauwerte in dem addierten Bild läßt sich entnehmen, ob dieses Bild aus einer Bildsequenz entstanden ist, die zum Auflegen eines echten, lebenden Fingers gehört. Während bei einem von einem lebenden Finger stammenden Bild eine gleichmäßige Verteilung der Grauwerte zu beobachten ist (d.h. die Ränder der geschwärzten Bereiche sind im zeitlichen Verlauf zunächst schwach ausgeprägt und wachsen dann gleichmäßig in alle Richtungen), lässt sich bei einem mit einem Imitat erzeugten Bild eine ungleichmäßige Grauwertverteilung feststellen (d.h. ein Wachstum der Grauwerte hat in erster Linie längs der imitierten Fingerlinien stattgefunden).

Wenn dieses Erkennungsverfahren automatisiert werden soll, kann beispielsweise eine Einteilung des Bildbereiches in einzelne Bildblöcke entsprechend den in der Figur eingezeichneten breiten gestrichelten Linien vorgenommen werden. In jedem dieser Blöcke wird dann ein Maß für den Grauwertanteil und die Grauwertverteilung berechnet. Zu diesem Zweck wird in jedem Block bⱼ der Mittelwert µⱼ der Grauwerte der in diesem Block enthaltenen Bildpunkte sowie die Streuung der Grauwerte um diesen Mittelwert als Standardabweichung σⱼ berechnet. Für die Gesamtheit aller Blöcke bⱼ können dann der Mittelwert µ(...σⱼ...) dieser Standardabweichungen und die Streuung der Mittelwerte der Grauwerte in den einzelnen Blöcken als Standardabweichung σ(...µⱼ...) berechnet werden. Bei einer Wahl der Kantenlänge der Blöcke von etwa einer Periodenlänge des durch die Rillen und Furchen gegebenen Musters ergibt sich für einen echten Finger eine relativ hohe mittlere Streuung der Grauwerte innerhalb der Blöcke, aber aufgrund der gleichmäßigen Verteilung nur eine geringe Streuung der Mittelwerte über alle Blöcke. Bei einer Fälschung (Fingerimitat) ist ein entgegengesetztes Verhalten zu beobachten. In dem betrachteten Fall ist also beispielsweise der Quotient µ(...σⱼ...)/σ(...µⱼ...) ein geeignetes Kriterium für die Einteilung in Original- und Fälschungsbilder.

Die beschriebene Variante ist ein besonders bevorzugtes Ausführungsbeispiel. Es ist auch möglich, statt der speziellen Bilder, in denen sich ein wesentliches Anwachsen der Grauwerte gegenüber dem vorhergehenden Bild feststellen ließ, die gesamte Bildsequenz heranzuziehen oder eine andere Auswahl von Bildern aus dieser Sequenz, um durch eine Überlagerung das besagte Grauwertbild zu erzeugen. Eine weitere Möglichkeit liegt darin, die speziellen Anzahlen n_{edge,i} zur Einteilung in Original- und Fälschungsbilder heranzuziehen. In typischen Originalbildern ist nämlich das Verhältnis der oben angegebenen Differenzen dᵢ zu n_{edge,i} relativ klein (sehr viele der neu auf Eins gesetzten Bildpunkte tragen zum Wachstum der geschwärzten Bereiche am Rand bei), wohingegen bei einer typischen Fälschung nur relativ wenige Randpunkte dunkel werden. Da die absoluten Zahlen für die Summe der n_{edge,i} von Bildsequenz zu Bildsequenz schwanken, ist eine Normierung auf den oben definierten Wert n_{ridge} sowie eventuell auf die gesamte effektive Sequenzlänge (Anzahl der Bilder mit signifikantem Anstieg der Schwärzung) sinnvoll.

Wesentlich für das erfindungsgemäße Verfahren zur Analyse der Fingerabdruckbilder ist die Auswertung einer Folge von Bildern, die in sehr kurzen zeitlichen Abständen nacheinander bei der Entstehung des eigentlichen Fingerabdruckes aufgenommen werden und jeweils anhand eines Schwellenwertes für den Grauwert binarisiert werden. Das Abzählen der Anzahl von Bildpunkten mit Änderungen gegenüber dem vorhergehenden Bild dient vorzugsweise dazu, die relevanten Bilder aus dieser Sequenz auszufiltern. Die als relevant eingestuften Bilder können dann einer Analyse zugeführt werden, z.B. der beschriebenen Analyse der Grauwertverteilung in dem überlagerten Bild, mit deren Hilfe zwischen Original und Fälschung anhand von statistisch erfassten Merkmalen unterschieden werden kann. Ein besonderer Vorteil des erfindungsgemäßen Verfahrens ist die Möglichkeit, dieses Verfahren mittels elektronischer Schaltungen vollständig zu automatisieren.

## Patentansprüche

1. Verfahren zur Analyse von elektronisch erzeugten Fingerabdruckbildern, bei dem
a) während ein Fingerabdruck mittels eines Fingerabdrucksensors erfasst wird, mehrere in Bildpunkte unterteilte Fingerabdruckbilder Bᵢ in zeitlicher Aufeinanderfolge erzeugt werden und
b) die Anzahl nᵢ der Bildpunkte, die einen Grauwert (Schwärzung) aufweisen, der einen vorgegebenen Wert überschreitet, zu jedem Fingerabdruckbild Bᵢ festgestellt und gespeichert wird,
**dadurch gekennzeichnet, dass**
c) die Differenzen dᵢ = nᵢ - nᵢ₋₁ dieser Anzahlen nᵢ für zeitlich aufeinanderfolgend erzeugte Fingerabdruckbilder ermittelt und gespeichert werden,
d) zu jedem in Schritt b erzeugten Fingerabdruckbild die spezielle Anzahl n_{edge,i} der Bildpunkte festgestellt wird, die den vorgegebenen Grauwert in dem betreffenden Fingerabdruckbild Bᵢ erstmals überschreiten und benachbart zu Bildpunkten liegen, die den vorgegebenen Grauwert in dem vorhergehenden Fingerabdruckbild Bᵢ₋₁ bereits überschritten,
e) die in Schritt c aus Anzahlen nᵢ₋₁, nᵢ ermittelten Differenzen dᵢ in das jeweilige Verhältnis dᵢ/n_{edge,i-1} oder dᵢ/n_{edge,i} zu einer der beiden zugehörigen speziellen Anzahlen n_{edge,i-1} bzw. n_{edge,i} gesetzt werden, und
f) der Fingerabdruck, gemäß dem Wert der Verhältnisse in Schritt e, zwischen Original und Fälschungen unterschieden wird.

2. Verfahren nach Anspruch 1, bei dem
f) für ein letztes aufgenommenes Fingerabdruckbild die Anzahl n_{ridge} der Bildpunkte ermittelt wird, die den vorgegebenen Grauwert überschreiten und die längs in dem Fingerabdruckbild wiedergegebener Fingerlinien oder längs fiktiver Mittellinien dieser Fingerlinien aufeinander folgen oder längs entsprechender Mittellinien, die rechnerisch durch ein Ausdünnen der Fingerlinien zu Kurven erzeugt werden, und
die speziellen Anzahlen n_{edge,i} mittels einer Division durch diese Anzahl n_{ridge} normiert werden.

3. Verfahren nach Anspruch 1 oder 2, bei dem
g) diejenigen speziellen Fingerabdruckbilder B_{grow,i} bestimmt werden, für die das Verhältnis dᵢ/nᵢ oder das Verhältnis dᵢ/nᵢ₋₁ eine vorgegebene Schwelle überschreitet.

4. Verfahren nach Anspruch 3, bei dem
h) die in Schritt g bestimmten speziellen Fingerabdruckbilder B_{grow,i} durch Addition in ein Bild mit Grauwertabstufungen überführt werden.

5. Verfahren nach Anspruch 4, bei dem
i) das in Schritt h erzeugte Bild in Blöcke bⱼ unterteilt wird,
in jedem Block ein Mittelwert µⱼ der Grauwerte und eine Streuung der Grauwerte um diesen Mittelwert als Standardabweichung σⱼ ermittelt wird und
der Quotient µ(...σⱼ ...)/σ(...µⱼ ...) aus dem Mittelwert µ(...σⱼ ...) dieser Standardabweichungen über alle Blöcke und der Streuung der Mittelwerte µⱼ der Grauwerte in den jeweiligen Blöcken bⱼ als Standardabweichung σ(...µⱼ ...) gebildet wird, um anhand dieses Quotienten ein Fingerabdruckbild eines lebenden Fingers von einem gefälschten Bild zu unterscheiden.

## Claims

1. Method for analysing electronically generated fingerprint images, in which
a) while a fingerprint is detected by means of a fingerprint sensor, a plurality of fingerprint images Bᵢ subdivided into pixels are generated in temporal succession and
b) the number nᵢ of pixels having a grey-scale value (blackening) that exceeds a predetermined value is ascertained for each fingerprint image Bᵢ and stored,
**characterized in that**
c) the differences dᵢ = nᵢ -nᵢ₋₁ between these numbers nᵢ for temporally successively generated fingerprint images are determined and stored,
d) for each fingerprint image generated in step b, the specific number n_{edge,i} of pixels which exceed the predetermined grey-scale value in the relevant fingerprint image Bᵢ for the first time and lie adjacent to pixels which have already exceeded the predetermined grey-scale value in the preceding fingerprint image Bᵢ₋₁ is ascertained,
e) the differences dᵢ determined from numbers nᵢ₋₁, nᵢ in step c are placed into the respective ratio dᵢ/n_{edge,i-1} or dᵢ/n_{edge,i} in relation to one of the two associated specific numbers n_{edge,i-1} and n_{edge,i}, respectively, and
f) the fingerprint, in accordance with the value of the ratios in step e, is distinguished between original and counterfeits.

2. Method according to Claim 1, in which
f) for a last recorded fingerprint image, the number n_{ridge} of pixels which exceed the predetermined grey-scale value and which succeed one another along finger lines reproduced in the fingerprint image or along fictitious centre lines of said finger lines or along corresponding centre lines that are generated computationally by thinning the finger lines to form curves is determined, and
the specific numbers n_{edge,i} are normalized by means of a division by said number n_{ridge}.

3. Method according to Claim 1 or 2, in which
g) those specific fingerprint images B_{grow,i} for which the ratio dᵢ/nᵢ or the ratio dᵢ/nᵢ₋₁ exceeds a predetermined threshold are determined.

4. Method according to Claim 3, in which
h) the specific fingerprint images B_{grow,i} determined in step g are converted into an image with grey-scale value gradations by addition.

5. Method according to Claim 4, in which
i) the image generated in step h is subdivided into blocks bⱼ,
in each block a mean value µⱼ of the grey-scale values is determined and a variance of the grey-scale values about said mean value is determined as standard deviation σⱼ, and
the quotient µ(...σⱼ ...)/σ(...µⱼ ...) is formed from the mean value µ(...σⱼ ...) of these standard deviations over all the blocks and the variance of the mean values µⱼ of the grey-scale values in the respective blocks bⱼ as standard deviation σ(...µⱼ ...) in order to distinguish a fingerprint image of a living finger from a counterfeit image on the basis of this quotient.

## Revendications

1. Procédé d'analyse d'images d'empreintes digitales produites électroniquement, dans lequel
a) tandis que l'on relève une empreinte digitale au moyen d'un capteur d'empreinte digitale, on produit successivement dans le temps plusieurs images Bᵢ d'empreintes digitales subdivisées en points images et
b) on constate le nombre nᵢ des points images ayant une valeur de gris (noircissement) dépassant une valeur prescrite pour chaque image Bᵢ d'empreinte digitale et on le mémorise,
**caractérisé en ce que**
c) on détermine les différences dᵢ = nᵢ - nᵢ₋₁ de ces nombres nᵢ pour des images d'empreintes digitales produites successivement dans le temps et on les mémorise,
d) à chaque image d'empreinte digitale produite au stade b, on constate le nombre n_{edge,i} spécial des points images qui dépassent pour la première fois la valeur de gris prescrite dans l'image Bᵢ d'empreinte digitale concernée et qui sont voisins des points images qui ont déjà dépassé la valeur de gris prescrite dans l'image Bᵢ₋₁ d'empreinte digitale précédente,
e) on transforme les différences dᵢ déterminées au stade c à partir des nombres nᵢ₋₁, nᵢ en le rapport dᵢ/n_{edge,i-1} ou dᵢ/n_{edge,i} respectif à l'un des deux nombres n_{edge,i-1} ou n_{edge,i} spéciaux associés, et
f) on fait la différence entre l'original et des fraudes de l'empreinte digitale suivant la valeur des rapports au stade e.

2. Procédé suivant la revendication 1, dans lequel
f) pour une image d'empreinte digitale enregistrée en dernier, on détermine le nombre n_{ridge} des points images qui dépassent la valeur de gris prescrite et qui se succèdent le long de lignes de doigt reproduites dans l'image de l'empreinte digitale ou le long de lignes moyennes fictives de ces lignes de doigt ou le long de lignes moyennes correspondantes qui ont été produites par le calcul par un amincissement des lignes de doigt en courbes, et on norme les nombres n_{edge,i} spéciaux au moyen d'une division par ce nombre n_{ridge}.

3. Procédé suivant la revendication 1 ou 2, dans lequel
g) on détermine les images B_{grow,i} d'empreintes digitales spéciales qui dépassent pour le rapport dᵢ/nᵢ ou le rapport dᵢ/nᵢ₋₁ un seuil prescrit.

4. Procédé suivant la revendication 3, dans lequel
h) on transforme les images B_{grow,i} d'empreintes digitales spéciales déterminées au stade g par addition en une image ayant des gradations de valeurs de gris.

5. Procédé suivant la revendication 4, dans lequel
i) on subdivise l'image produite au stade h en blocs bⱼ,
on détermine dans chaque bloc une moyenne µⱼ des valeurs de gris et une dispersion des valeurs de gris autour de cette moyenne en tant qu'écart-type σⱼ et
on forme le quotient µ(...σⱼ...)/σ(...µⱼ...) de la moyenne µ(...σⱼ...) de ces écarts-types sur tous les blocs à la dispersion des moyennes µⱼ des valeurs de gris dans les blocs bⱼ respectifs sous la forme d'écart-type σ(...µⱼ...), et au moyen de ce quotient on distingue une image d'empreinte digitale d'un doigt vivant d'une image frauduleuse.
